# EUROPEAN PATENT SPECIFICATION

(11) **EP 0 799 263 B1**
(45) Date of publication and mention of the grant of the patent: **25.08.1999**
(21) Application number: 95942732.9
(22) Date of filing: 18.12.1995
(51) Int. Cl.: C08G 59/12, C08L 63/00, C08L 71/02, C08G 65/32

(54) **NOVEL EPOXY-FUNCTIONAL POLYETHERS**
EPOXYPOLYETHER
NOUVEAUX POLYETHERS A FONCTIONNALITE EPOXY

(30) Priority: 21.12.1994 US 361074
(43) Date of publication of application: 08.10.1997
(73) Proprietor: SHELL INTERNATIONALE RESEARCH MAATSCHAPPIJ B.V., 2596 HR Den Haag (NL)
(72) Inventor: FRIED, Herbert, Elliott, Houston, TX 77077 (US); STARK, Charles, John, Houston, TX 77095 (US)
(86) International application number: EP9505127
(87) International publication number: WO9619514

(56) References cited:
- EP-A- 0 618 245
- CH-A- 410 431
- CH-A- 454 455
- DE-C- 3 202 299
- CHEMICAL ABSTRACTS, vol. 90, no. 14, 2 April 1979 Columbus, Ohio, US; abstract no. 104683z, SAITO,H. ET AL: "Polyethylene glycol dicarboxylic acids" page 23; XP002000795 & JP,A,78 141 219 (KAWAKEN FINE CHEMICALS CO.LTD) 8 December 1978

## Description

The invention relates to aqueous epoxy resin compositions comprising epoxy-functional polyethers.

There are ever increasing demands for compounds useful in epoxy resin applications, for example as emulsifiers or diluents, as epoxy resins are required to perform under ever more specific and demanding conditions. In this respect reference is especially made to aqueous epoxy resin compositions, which are more environment-friendly than the classic organic solvent based systems. Such aqueous systems require specific emulsifiers and/or diluents which have to be compatible with the aqueous phase as well as with the organic phase.

It is desirable for such compounds to have epoxy functional groups to increase the compatibility with the cured epoxy matrix. Further, it is desirable to be able to provide such compounds with predefined hydrophilic and hydrophobic segments depending on the desired applications.

It is an object of the present invention to provide aqueous epoxy resin compositions, comprising epoxy-functional polyethers.

It has been found that composition comprising certain epoxy-functional polyethers can be made, which polyethers are very suitable for use as emulsifiers and/or reactive diluents in e.g. aqueous epoxy resin compositions which are suitable for coating purposes, by reaction of certain dicarboxylic acids and epoxy resins having more than one epoxy group.

Thus, the present invention relates to aqueous epoxy resin compositions comprising a product produced by reacting (a) a carboxylic acid having the formula: 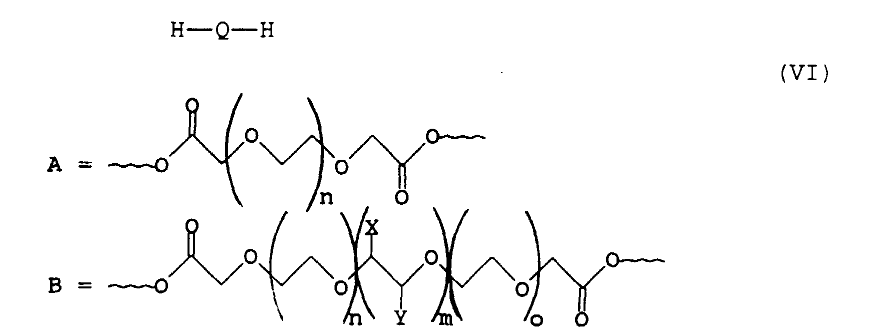 wherein Q is A or B, X and Y are independently a hydrogen, methyl or ethyl group with the provision that if X is methyl or ethyl, Y is hydrogen or if Y is methyl or ethyl, X is hydrogen, and m+n+o is a positive real number from 1 to 450 and (b) an epoxy resin having a functionality of at least 1.5 epoxide group per molecule in a carboxylic acid to epoxy resin mole ratio of from 1:2 to 1:20. In the above formulas n+m+o is preferably from 6 to 200.

The hydrophilic carboxylic acid can be produced by oxidation of a polyethylene glycol, polypropylene glycol, polybutylene glycol or a block copolymer of ethylene oxide and propylene oxide or polybutylene oxide ("polyalkylene glycol"). Preferably the polyalkylene glycol has a formula: 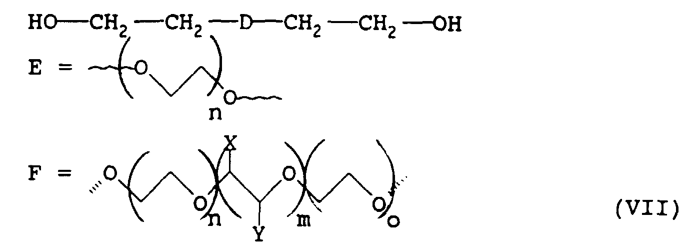 wherein D is E or F, X and Y are independently hydrogen, methyl or ethyl group with the provision that if X is methyl or ethyl, Y is hydrogen or if Y is methyl or ethyl, X is hydrogen and m+n+o is a positive real number from 1, preferably from 20 to 450, preferably to 400 and m, n and o can independently be a positive real number from 0 to 450.

Polyalkylene glycols generally contain a distribution of compounds with a varying number of oxyethylene units, n or o and/or oxypropylene or oxybutylene units, m. Generally, the quoted number of units is the whole number closest to the statistical average, and the peak of the distribution. Positive real number as used herein refers to a number which is positive and includes integers and fractions of integers.

The carboxylic acids can be produced by oxidation of the polyalkylene glycols including, but not limited to, the processes described in U.S. Patent No. 5,250,727. Generally, oxygen is added to the polyalkylene glycol in the presence of a free radical (e.g., 2,2,6,6-tetramethyl-1-piperidinyloxy) and an inorganic acid (e.g., nitric acid) to produce the carboxylic acid until substantially all of the alcohol groups are oxidized to carboxylic acid groups.

The carboxylic acids can be represented by the general formula:

H-Q-H (VI)

wherein Q is as defined above.

The epoxy-functional polyethers are produced by reacting the carboxylic acid described above with an hydrophobic epoxy resin. Generally, the epoxy resin can be any reactive epoxy resin having a 1,2-epoxy equivalency (functionality) preferably, on the average, greater than about 1.5 epoxide groups per molecule. The epoxy resin can be saturated or unsaturated, linear or branched, aliphatic, cycloaliphatic, aromatic or heterocyclic, and may bear substituents which do not materially interfere with the reaction with the carboxylic acid. Such substituents can include bromine or fluorine. They may be monomeric or polymeric, liquid or solid, but are preferably liquid or a low melting solid at room temperature. Suitable epoxy resins include glycidyl ethers prepared by reacting epichlorohydrin with a compound containing a real positive number of at least 1.5 aromatic hydroxyl group carried out under alkaline reaction conditions. Examples of epoxy resins suitable for use in the invention include diglycidyl ethers of dihydric compounds. Generally epoxy resins contain a distribution of compounds with a varying number of 1,2-epoxy equivalency.

Preferred epoxy resins include, but are not limited to those represented by the formula: 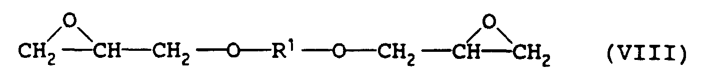 wherein R¹ is divalent aliphatic, divalent cycloaliphatic, divalent aryl, or divalent arylaliphatic group, preferably R¹ contains 8 to 120 carbon atoms. The term divalent aliphatic group includes compounds having oxygen and/or sulfur atoms on the backbone.

Preferably the epoxy resin is a diglycidyl ether of a dihydric phenol, diglycidyl ether of a hydrogenated dihydric phenol (cycloaliphatic glycidyl ether), an aliphatic glycidyl ether or cycloaliphatic epoxies. For example, R¹ can be a divalent cycloaliphatic group having the formula: 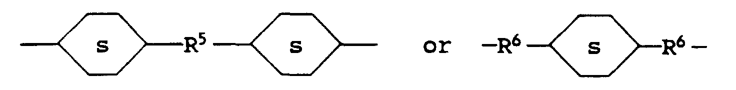 wherein R⁵ and R⁶ are each independently an alkylene group or a divalent arylaliphatic group having the formula: 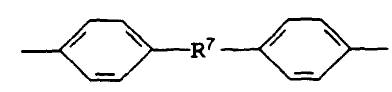 wherein R⁷ is an alkylene group.

Diglycidyl ethers of dihydric phenols can be produced, for example, by reacting an epihalohydrin with a dihydric phenol in the presence of an alkali. Examples of suitable dihydric phenols include: 2,2-bis(4-hydroxyphenyl)propane (bisphenol-A); 2,2-bis(4-hydroxy-3-tert-butylphenyl)propane; 1,1-bis(4-hydroxyphenyl)ethane; 1,1-bis(4-hydroxyphenyl) isobutane; bis(2-hydroxy-1-naphthyl)methane; 1,5-dihydroxynaphthalene; 1,1-bis(4-hydroxy-3-alkylphenyl) ethane and the like. Suitable dihydric phenols can also be obtained from the reaction of phenol with aldehydes such as formaldehyde (bisphenol-F). Diglycidyl ethers of dihydric phenols includes fusion products of the above diglycidyl ethers of dihydric phenols with phenolic compounds such as bisphenol-A, such as those described in U.S. Patent Nos. 3,477,990 and 4,734,468.

Diglycidyl ethers of hydrogenated dihydric phenols (or cycloaliphatic glycidyl ethers) can be produced, for example, by hydrogenation of dihydric phenols followed by glycidation with epihalohydrin in the presence of a Lewis acid catalyst and subsequent formation of the glycidyl ether by reaction with sodium hydroxide. Examples of suitable dihydric phenols are listed above.

Aliphatic glycidyl ethers optionally containing oxygen atoms on the backbone in the form of ether linkages can be produced, for example, by reacting an epihalohydrin with an aliphatic diol or a polyalkylene-oxide glycol in the presence of a lewis acid catalyst followed by conversion of the halohydrin intermediate to the glycidyl ether by reaction with sodium hydroxide. Examples of preferred aliphatic glycidyl ethers include those corresponding to the formulas: 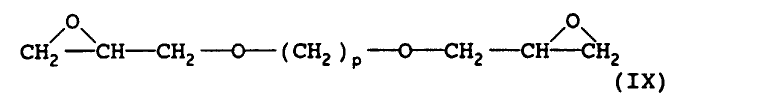 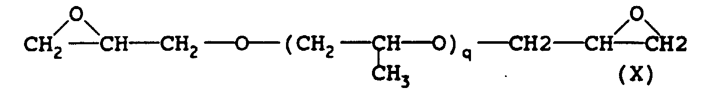 wherein:
p is an integer from 2 to 12, preferably from 2 to 6; and
q is an integer from 4 to 24, preferably from 4 to 12.

Examples of suitable aliphatic glycidyl ethers include for example, diglycidyl ethers of 1,4 butanediol, neopentyl glycol, cyclohexane dimethanol, hexanediol, polyproplene glycol, and like diols and glycols; and triglycidyl ethers of trimethylol ethane and trimethylol propane.

Cycloaliphatic epoxies can be produced by epoxidizing a cycloalkene-containing compound with greater then one olefinic bond with peracetic acid. Examples of the preferred cycloaliphatic epoxies include those corresponding to the formulas: 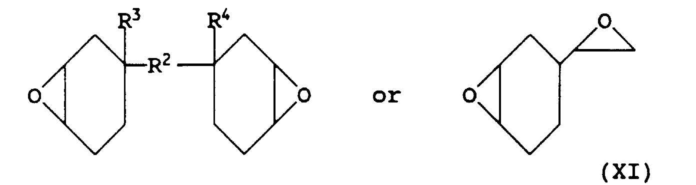 wherein R² is a divalent aliphatic group optionally containing ether or ester groups or together with R³ or R⁴ form a spiro ring optionally containing heteroatoms, and R³ and R⁴ are independently hydrogen or R³ or R⁴ together with R² form a spiro ring optionally containing heteroatoms such as oxygen. Preferably R² contains about 1 to 20 carbon atoms. Examples of cycloaliphatic epoxies include, for example, 3,4-epoxycyclohexylmethyl-(3,4-epoxy)cyclohexane carboxylate, dicycloaliphatic diether diepoxy [2-(3,4-epoxy)cyclohexyl-5,5-spiro(3,4-epoxy)cyclohexane-m-dioxane], bis(3,4-epoxycyclohexylmethyl)adipate, bis(3,4-epoxycyclohexyl)adipate and vinylcyclohexene dioxide [4-(1,2-epoxyethyl)-1,2-epoxycyclohexane]. Cycloaliphatic epoxies include compounds of the formulas:

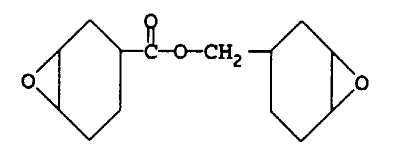

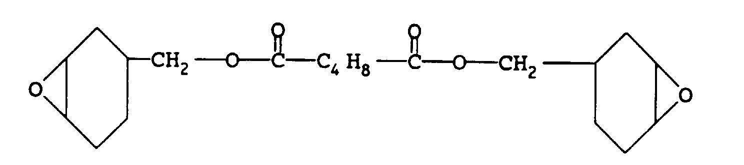

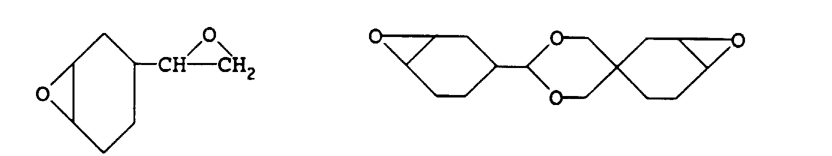

Commercial examples of preferred epoxy resins include, for example, EPON Resins DPL-862, 828, 826, 825, 1001, EPONEX Resin 1510, HELOXY Modifiers 107, 67, 68, and 32 (EPON, EPONEX and HELOXY are Trade Marks) all available from Shell Chemical Company and Union Carbide Epoxy Resins ERL-4221, -4289, -4299, -4234 and -4206.

The carboxylic acid is contacted with the epoxy resin under conditions effective to react the acid group and the epoxide group and to produce epoxy-functional polyethers represented by the formulas: 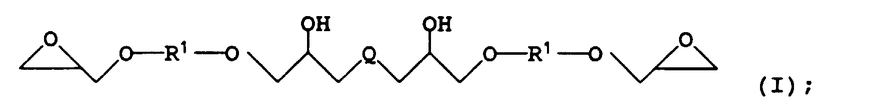 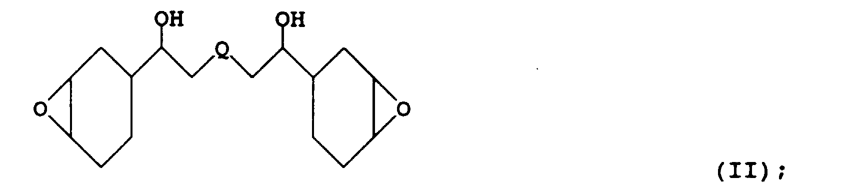 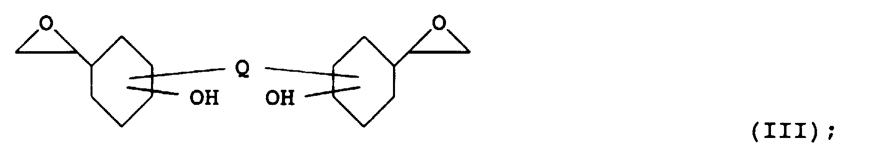 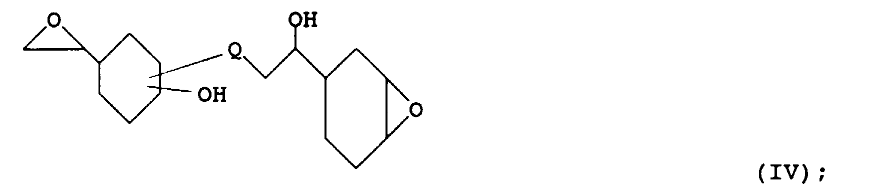 or 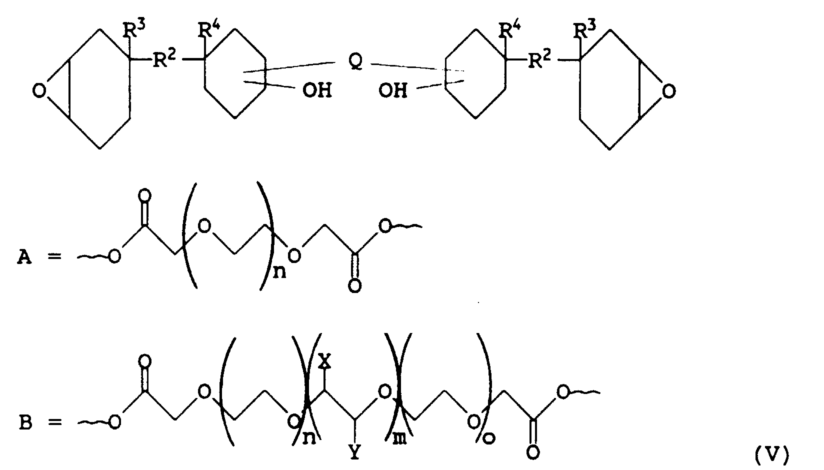 wherein Q is A or B, R¹ is independently a divalent hydrocarbon group, said divalent hydrocarbon groups having 8 to 120 carbon atoms, X and Y are independently a hydrogen, methyl or ethyl group with the provision that if X is methyl or ethyl, Y is hydrogen or if Y is methyl or ethyl, X is hydrogen and m+n+o is a positive real number from 1 to 450, R² is a divalent aliphatic group optionally containing ether or ester groups or together with R³ or R⁴ form a spiro ring optionally containing heteroatoms, and R³ or R⁴ are independently hydrogen or R³ and R⁴ together with R² form a spiro ring optionally containing heteroatoms such as oxygen. The location of the OH and Q bonding to the cycloaliphatic ring represents the different isomers formed by the cycloaliphatic ring opening reaction. It can be appreciated that the diacid Q moiety can be attached to either para- or meta- position from R² or epoxy moiety.

Typically, the mole ratio of the carboxylic acid to epoxy resin is within the range of from 1:2, more preferably from 1:3 to 1:20, more preferably to 1:10. The reaction is typically carried out at a temperature from ambient temperature to an elevated temperature sufficient to react the acid group and the epoxide group which is typically within the range of from 25 °C, preferably from 60 °C, to 150 °C, preferably to 130 °C for a time effective to produce the reaction products. The progress of the reaction can be monitored and targeted to produce the desired product by measuring the acid equivalent weight and the epoxy equivalent weight of the reactant mixture. Generally, the reaction mixture is heated until an acid equivalent weight of the mixture indicates that greater or equal than 99% of the original number of equivalents of acid is consumed, and at least an equivalent amount of epoxies is consumed which is generally one hour or greater. For cycloaliphatic epoxies, the monitoring of the course of reaction by following consumption of epoxy alone can be misleading, due to competing homopolymerization of this type of epoxy group. Preferably, this reaction is carried out in the presence of a catalyst.

The reaction typically produces a product which contains molecules which result from the condensation of two molecules of diepoxides with one molecule of diacid, as well as other oligomeric species or unreacted epoxide depending on the mole or equivalent ratios of the epoxy resin to the carboxylic acid groups and the amount of time the reaction is allowed to proceed. The reaction may be stopped before completion, in which case monoepoxy monoacid species will be present in the product mixture. Preferably, excess of the epoxy resin (mole ratio of the epoxy resin to carboxylic acid being greater than 2:1) is used to minimize the formation of the polyesterified species. If desired the diepoxide product or a mixture containing predominantly diepoxide product (diepoxide being the largest component in the mixture) can be recovered from the reaction mixture by conventional techniques.

The catalysts are bases or metal chelates such as, for example, ammonium compounds, phosphonium compounds, tertiary amines, and phosphines. Examples of more preferred catalysts include, for example, triphenylphosphonium acid acetate, ethyltriphenyl phosphonium iodide, benzyldimethylamine, triphenylphosphine, tributylamine, aluminum salicylates, tetramethylammonium hydroxide and the like. The amount of catalyst present is preferably from 0.005, more preferably from 0.01, to 1.0, more preferably to 0.5 weight percent based on the total weight of the epoxy resin and the carboxylic acid.

Polyethylene glycols (PEG) used in the examples below were obtained from Aldrich Chemical Co. 2,2,6,6-tetramethyl-1-piperidinyloxy (TEMPO) used in the examples below was obtained from Aldrich Chemical Co. EPON Resins 826 and 828 (diglycidyl ether of dihydric phenol having epoxy equivalent weight of 187-188) and EPONEX Resin 1510 (a diglycidyl ether of a hydrogenated dihydric phenol having epoxy equivalent weight of 220) were obtained from Shell Chemical Company.

### EXAMPLE 1

To a 500 ml gas washing bottle, fitted with a condenser was added 100 g of polyethylene glycol (average molecular weight 3400), 5.0 g of TEMPO free radical and 200 ml of methylene chloride. The vessel and its contents were heated to the boiling point by immersing the vessel in a heated water bath. An air sparge of 0.4 l/min. was initiated, then 5.0 g nitric acid was added to the mixture. Temperature and sparging were maintained for 8 hours. The product mixture was then condensed, using a rotovap. The residue was treated with isopropanol to reduce the active oxidants. Most of the oxidant residues were then removed by washing the solid product blend with several portions of acetone. After drying under nitrogen, the solid product exhibited an acid equivalent weight of 1841.

### EXAMPLE 2

### Preparation of α-(Carboxymethyl)-ω(Carboxyethoxy)-poly(oxy-1,2-ethanediyl)

To a 2000 ml, four neck flask, fitted with a stirrer, thermocouple, air sparge tube, condenser and addition funnel, was added 200 grams (0.05 equiv.) of polyethylene glycol of approximately 8000 Mn (Aldrich Chemical Co.), 7.8 grams (0.05 equiv.) of 2,2,6,6-tetramethyl-1-piperidinyloxy, free radical (Aldrich Chemical Co., TEMPO, free radical) and 400 grams of dichloromethane. The mixture was heated to reflux, then air was introduced into the mixture through the sparge tube. Next, concentrated nitric acid (7.8 grams) was then added over 17 minutes and the mixture was held at reflux for 8.5 hours. After this time, 220 grams of 2-propanol was added and the mixture stirred briefly. Volatiles were then removed by means of a rotary evaporator. The residue solidified upon cooling. It was ground to a powder and dried in a vacuum oven at 40 °C to a constant weight of 197.8 grams. NMR analysis indicated complete conversion of hydroxyl to carboxyl functionality. The solid possessed an acid equivalent weight of 4220.

### EXAMPLE 3

### Preparation of an epoxy-functional polyether with EPON Resin 826

The diacid obtained in Example 1 was condensed with 10.0 epoxy equivalents of EPON Resin 826 until all acid functionality had been consumed and the WPE of the mixture was 430. n = approx. 75.

### EXAMPLE 4

### Preparation of an epoxy-functional polyether with EPON Resin 828

To a 100 ml, three neck flask equipped with a magnetic stirring bar, condenser, temperature probe and nitrogen seal was added 30 g (0.0071 equivalent) of the acid-functional polyether, 13.3 grams of EPON Resin 828 and 0.22 gram of tetramethylammonium bromide. This mixture was warmed to 140 °C until the epoxide equivalent weight (WPE) of the mixture exceeded 677. The surfactant containing composition was isolated by pouring the contents of the flask into an aluminum pan and allowing it to cool. The WPE of the isolated material was found to be 722. n = 180.

### EXAMPLE 5

### Preparation of an epoxy-functional polyether with EPONEX Resin 1510

To a 100 ml, three neck flask equipped with a magnetic stirring bar, condenser, temperature probe and nitrogen seal was added 30 g (0.0071 equivalent) of the acid-functional polyether, 15.9 grams of EPONEX Resin 1510 and 0.23 gram of tetramethylammonium bromide. This mixture was warmed to 140 °C until the epoxide equivalent weight (WPE) of the mixture exceeded 722. After 20 minutes of heating at 140 °C, the WPE of the mixture was 732. The surfactant containing composition was isolated by pouring the contents of the flask into an aluminum pan and allowing it to cool. n = approx. 180.

## Claims

1. Aqueous epoxy resin composition, comprising a product produced by reacting (a) a carboxylic acid having the formula: 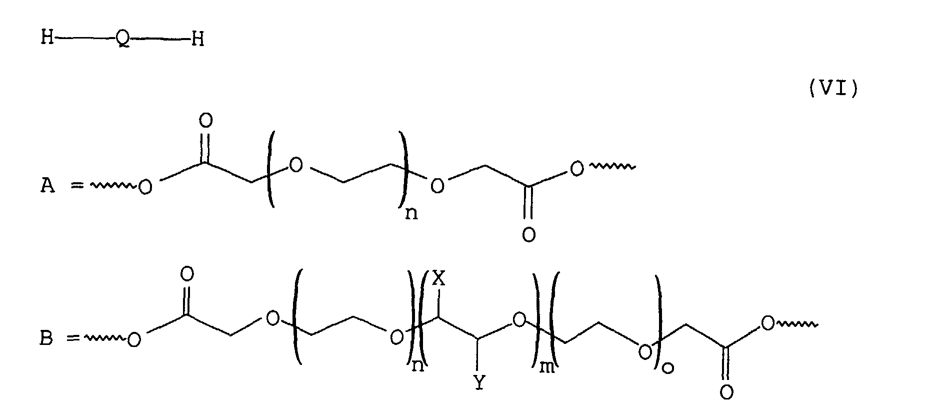 wherein Q is A or B, X and Y are independently a hydrogen, methyl or ethyl group with the provision that if X is methyl or ethyl, Y is hydrogen or if Y is methyl or ethyl, X is hydrogen, and m+n+o is a positive real number from 1 to 450 and (b) an epoxy resin having a functionality of at least 1.5 epoxide group per molecule in a carboxylic acid to epoxy resin mole ratio of from 1:2 to 1:20.

2. The composition of claim 1 wherein n+m+o is a positive real number from 6 to 200.

3. The composition of claim 1 wherein the epoxy resin has the formula: 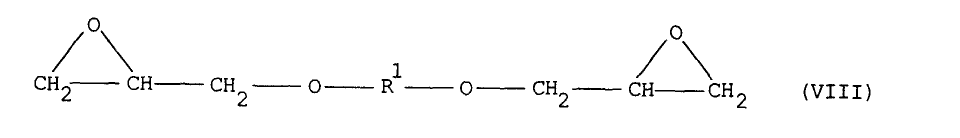 wherein R¹ is divalent aliphatic, divalent cycloaliphatic or divalent arylaliphatic group.

4. The composition of claim 1 wherein the epoxy resin is a diglycidyl ether of a dihydric phenol, or a diglycidyl ether of a hydrogenated dihydric phenol.

5. Aqueous epoxy resin composition, comprising an epoxy-functional polyether having the formula: 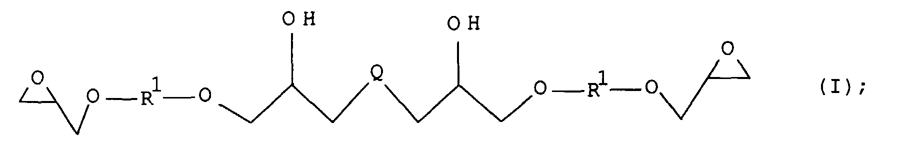 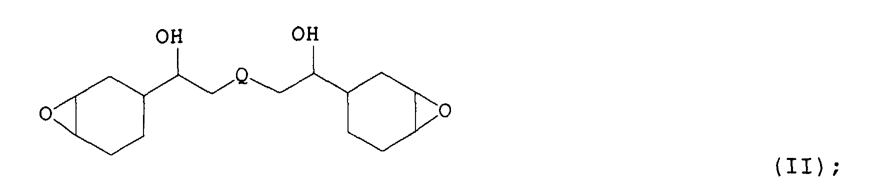 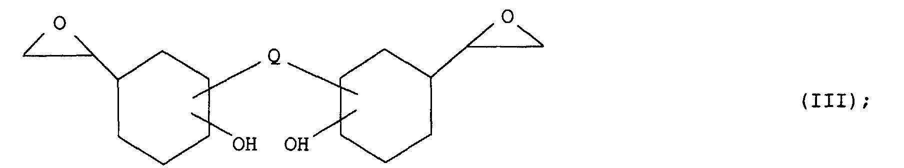 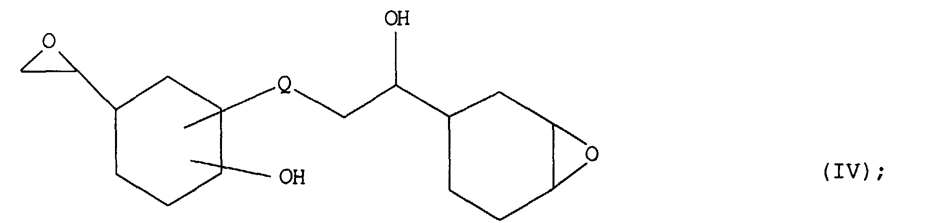 or 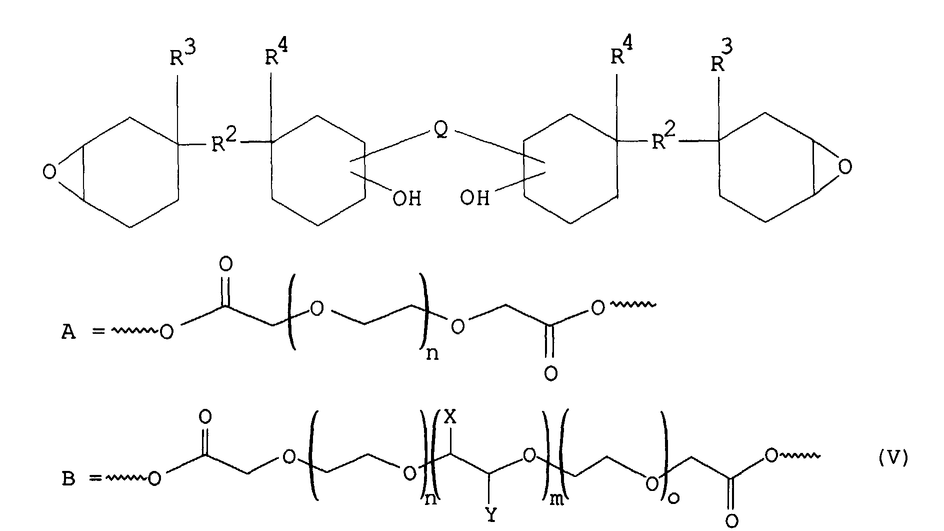 wherein Q is A or B, R¹ is independently a divalent hydrocarbon group, X and Y are independently a hydrogen, methyl or ethyl group with the provision that if X is methyl or ethyl, Y is hydrogen or if Y is methyl or ethyl, X is hydrogen and m+n+o is a positive real number from 1 to 450, R² is a divalent aliphatic group optionally containing ether or ester groups or together with R³ or R⁴ form a spiro ring optionally containing heteroatoms, and R³ and R⁴ are independently hydrogen or R³ or R⁴ together with R² form a spiro ring optionally containing heteroatoms such as oxygen.

6. Aqueous coating composition, comprising at least a dispersed epoxy resin and a product produced by reacting (a) a carboxylic acid having the formula: 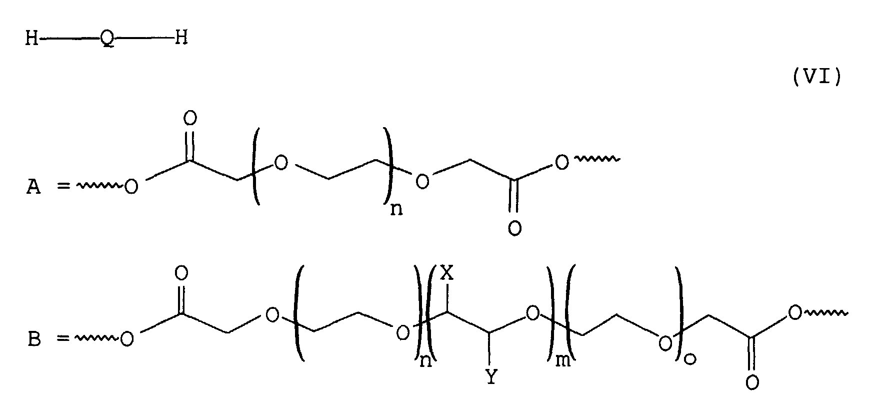 wherein Q is A or B, X and Y are independently a hydrogen, methyl or ethyl group with the provision that if X is methyl or ethyl, Y is hydrogen or if Y is methyl or ethyl, X is hydrogen, and m+n+o is a positive real number from 1 to 450 and (b) an epoxy resin having a functionality of at least 1.5 epoxide group per molecule in a carboxylic acid to epoxy resin mole ratio of from 1:2 to 1:20.

## Patentansprüche

1. Wäßrige Epoxyharzzusammensetzung, mit einem Gehalt an einem Produkt, das durch Umsetzen (a) einer Carbonsäure mit der Formel: 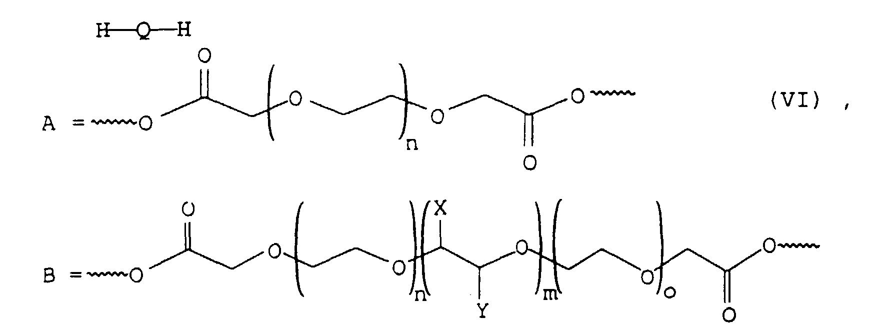 worin Q für A oder B steht, X und Y unabhängig eine Wasserstoff-, Methyl- oder Ethylgruppe mit der Maßgabe darstellen, daß dann, wenn X Methyl oder Ethyl bedeutet, Y Wasserstoff ist, oder dann, wenn Y Methyl oder Ethyl bedeutet, X Wasserstoff ist, und m+n+o eine positive reale Zahl von 1 bis 450 bedeutet, mit (b) einem Epoxyharz mit einer Funktionalität von wenigstens 1,5 Epoxidgruppen pro Molekül bei einem Molverhältnis von Carbonsäure zu Epoxyharz von 1:2 bis 1:20, hergestellt wird.

2. Zusammensetzung nach Anspruch 1, worin n+m+o eine positive reale Zahl von 6 bis 200 ist.

3. Zusammensetzung nach Anspruch 1, worin das Epoxyharz die Formel 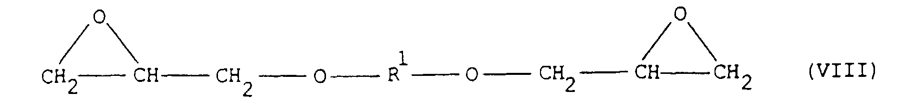 aufweist, worin R¹ eine zweiwertige aliphatische, zweiwertige cycloaliphatische oder zweiwertige arylaliphatische Gruppe ist.

4. Zusammensetzung nach Anspruch 1, worin das Epoxyharz ein Diglycidylether eines zweiwertigen Phenols oder ein Diglycidylether eines hydrierten zweiwertigen Phenols ist.

5. Wäßrige Epoxyharzzusammensetzung, umfassend einen epoxyfunktionellen Polyether mit der Formel: 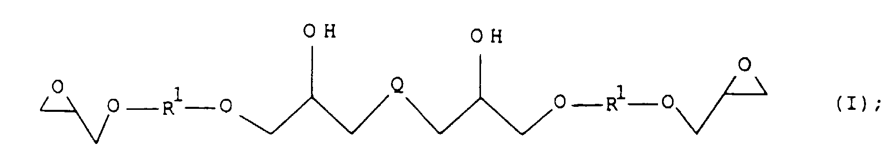 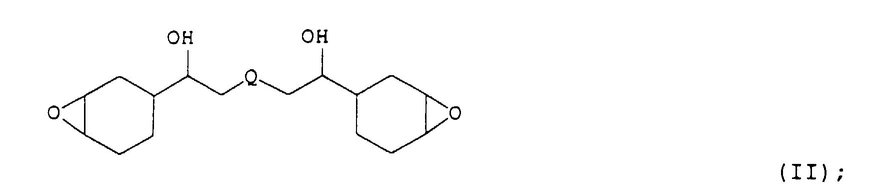 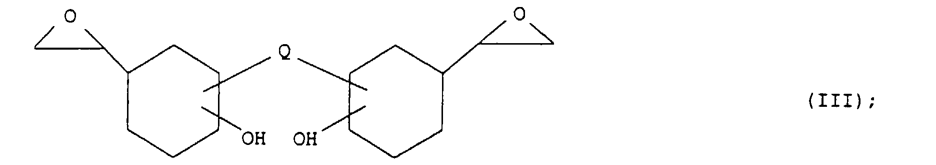 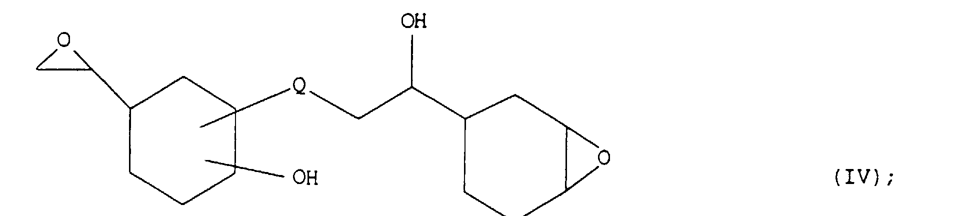 oder 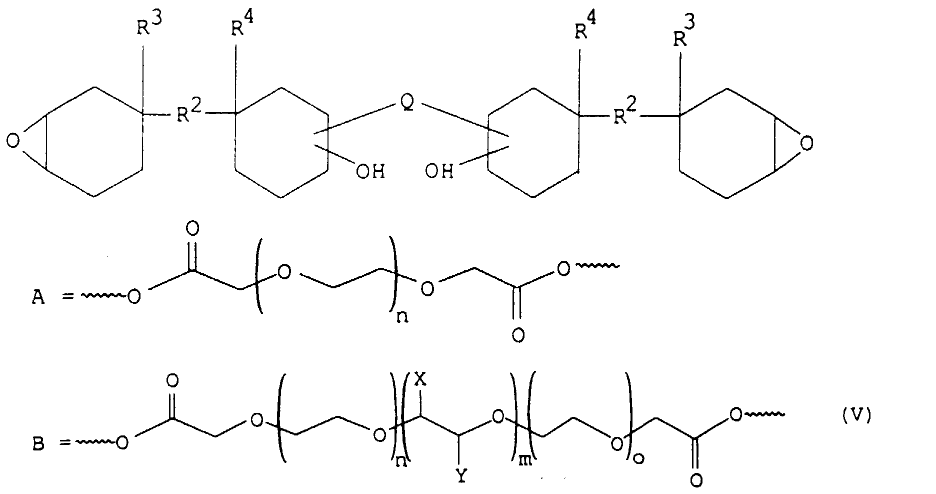 worin Q für A oder B steht, R¹ unabhängig eine zweiwertige Kohlenwasserstoffgruppe bedeutet, X und Y unabhängig eine Wasserstoff-, Methyl- oder Ethylgruppe bedeuten, mit der Maßgabe, daß dann, wenn X Methyl oder Ethyl darstellt, Y Wasserstoff ist, oder dann, wenn Y Methyl oder Ethyl darstellt, X Wasserstoff ist, und m+n+o eine positive reale Zahl von 1 bis 450 bedeutet, R² eine zweiwertige aliphatische Gruppe darstellt, die gegebenenfalls Ether- oder Estergruppen enthält oder zusammen mit R³ oder R⁴ einen Spiroring ausbildet, der gegebenenfalls Heteroatome enthält, und R³ und R⁴ unabhängig Wasserstoff bedeuten, oder R³ und R⁴ zusammen mit R² einen Spiroring ausbilden, der gegebenenfalls Heteroatome, wie Sauerstoff, enthält.

6. Wäßrige Beschichtungszusammensetzung, umfassend wenigstens ein dispergiertes Epoxyharz und ein durch Umsetzen von (a) einer Carbonsäure mit der Formel: 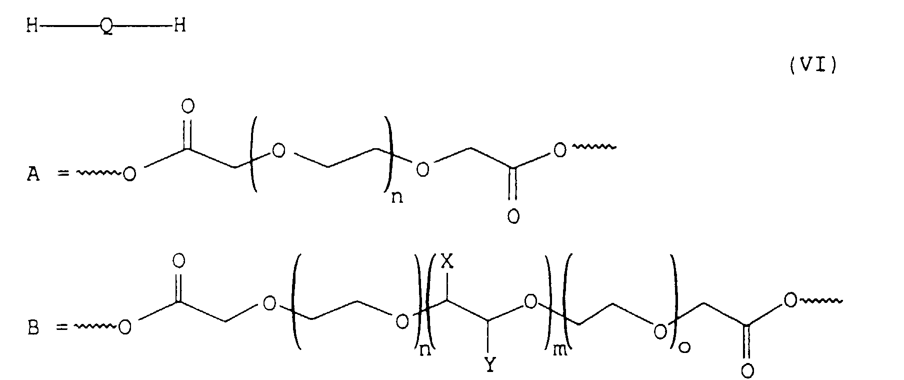 worin Q für A oder B steht, X und Y unabhängig eine Wasserstoff-, Methyl oder Ethylgruppe bedeuten, mit der Maßgabe, daß dann, wenn X Methyl oder Ethyl darstellt, Y Wasserstoff ist, oder dann, wenn Y Methyl oder Ethyl darstellt, X Wasserstoff ist, und m+n+o eine positive reale Zahl von 1 bis 450 bedeutet, mit (b) einem Epoxyharz mit einer Funktionalität von wenigtens 1,5 Epoxidgruppen je Molekül in einem Molverhältnis von Carbonsäure zu Epoxyharz von 1:2 bis 1:20 erhaltenes Produkt.

## Revendications

1. Composition aqueuse de résine époxy, comprenant un produit obtenu par la réaction (a) d'un acide carboxylique ayant la formule: 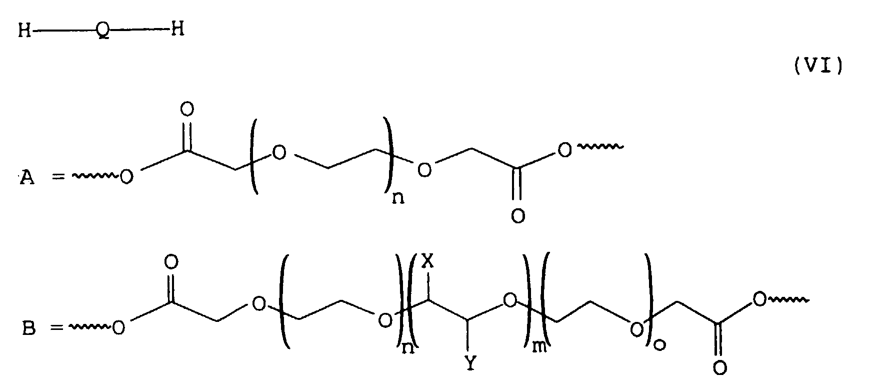 dans laquelle Q est A ou B, X et Y sont indépendamment de l'hydrogène ou un groupe méthyle ou éthyle à la condition que si X est du méthyle ou de l'éthyle, Y soit de l'hydrogène ou si Y est du méthyle ou de l'éthyle, X soit de l'hydrogène, et m+n+o est un nombre réel positif de 1 à 450 et (b) d'une résine époxy ayant une fonctionnalité d'au moins 1,5 groupe époxyde par molécule dans un rapport molaire de l'acide carboxylique à la résine époxy de 112 à 1/20.

2. Composition suivant la revendication 1, dans laquelle m+n+o est un nombre réel positif de 6 à 200.

3. Composition suivant la revendication 1, dans laquelle la résine époxy a la formule : 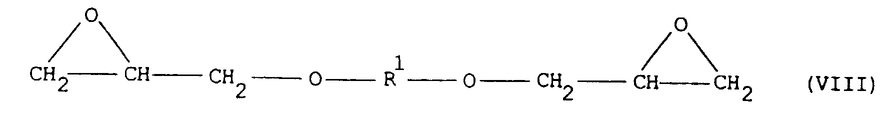 dans laquelle R¹ est un groupe aliphatique divalent, cycloaliphatique divalent ou arylaliphatique divalent.

4. Composition suivant la revendication 1, dans laquelle la résine époxy est un éther diglycidylique d'un phénol dihydrique ou un éther diglycidylique d'un phénol dihydrique hydrogéné.

5. Composition aqueuse de résine époxy, comprenant un polyéther époxy-fonctionnel ayant la formule : 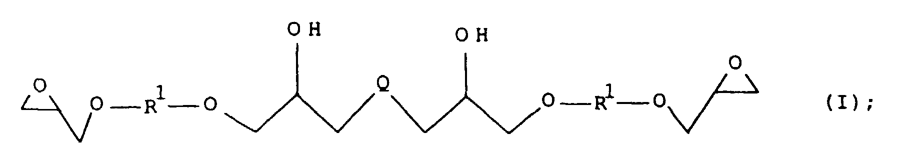 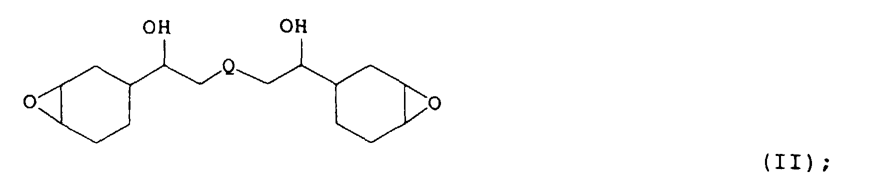 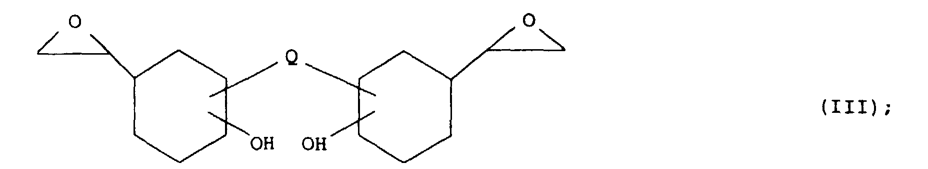 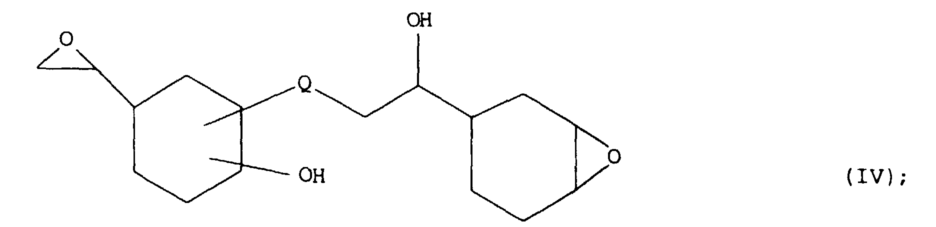 ou 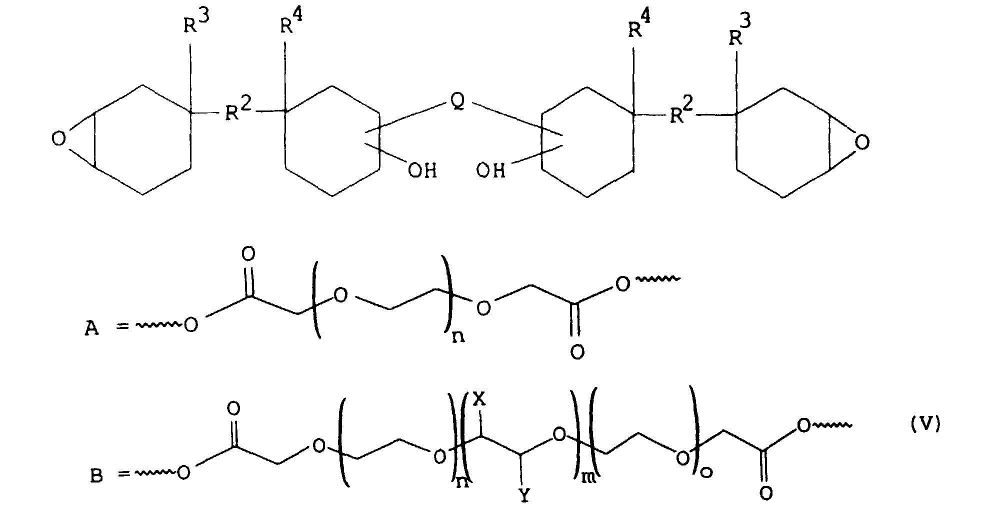 dans lesquelles Q est A ou B, R¹ est indépendamment un groupe hydrocarboné divalent, X et Y sont indépendamment de l'hydrogène ou un groupe méthyle ou éthyle à la condition que si X est du méthyle ou de l'éthyle, Y soit de l'hydrogène ou si Y est du méthyle ou de l'éthyle, X soit de l'hydrogène et m+n+o est un nombre réel positif de 1 à 450, R² est un groupe aliphatique divalent contenant éventuellement des groupes éther ou ester ou en même temps qu'avec R³ ou R⁴ il forme un cycle spiro contenant éventuellement des hétéroatomes, et R³ et R⁴ sont indépendamment de l'hydrogène ou bien R³ et R⁴ en même temps qu'avec R² forment un cycle spiro contenant éventuellement des hétéroatomes tels que l'oxygène.

6. Composition de revêtement aqueuse, comprenant au moins une résine époxy dispersée et un produit obtenu par la réaction (a) d'un acide carboxylique ayant la formule : 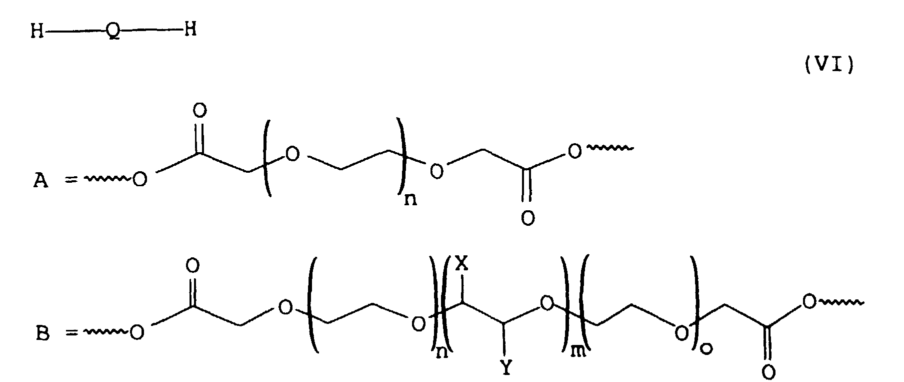 dans laquelle Q est A ou B, X et Y sont indépendamment de l'hydrogène ou un groupe méthyle ou éthyle à la condition que si X est du méthyle ou de l'éthyle, Y soit de l'hydrogène ou si Y est du méthyle ou de l'éthyle, X soit de l'hydrogène, et m+n+o est un nombre réel positif de 1 à 450 et (b) d'une résine époxy ayant une fonctionnalité d'au moins 1,5 groupe époxyde par molécule dans un rapport molaire de l'acide carboxylique à la résine époxy de 1/2 à 1/20.
